(19) **Europäisches Patentamt** / **European Patent Office** / **Office européen des brevets**

(11) **EP 3 995 993 A1**

(12) **EUROPEAN PATENT APPLICATION**

(43) Date of publication:
**11.05.2022 Bulletin 2022/19**

(21) Application number: **20020512.8**

(22) Date of filing: **06.11.2020**

(51) International Patent Classification (IPC):
**G06K 9/62** *(2022.01)* **G06T 7/00** *(2017.01)*

(52) Cooperative Patent Classification (CPC):
**G06K 9/6267; G06T 7/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Steinbeis Transferzentrum an der Hochschule Mannheim 68163 Mannheim (DE)**

(72) Inventor: **The designation of the inventor has not yet been filed**

(54) **PROCESS FOR THE EXTENSION OF DEEP-LEARNING BASED 2D-OBJECT-DETECTORS FOR THE 6D-POSE-ESTIMATION**

(57) In this patent application EfficientPose is introduced, a new approach for 6D object pose estimation. Our method is highly ac- curate, efficient and scalable over a wide range of computational resources. Moreover, it can detect the 2D bounding box of multiple objects and instances as well as estimate their full 6D poses in a single shot. This eliminates the significant increase in runtime when dealing with multiple objects other approaches suffer from. These approaches aim to first detect 2D targets, e.g. keypoints, and solve a Perspective-n-Point problem for their 6D pose for each object afterwards. We also propose a novel augmentation method for direct 6D pose estimation approaches to improve performance and generalization, called 6D augmentation. Our approach achieves a new state-of-the-art accuracy of ?% in terms of the ADD(-S) metric on the widely- used 6D pose estimation benchmark dataset Linemod using RGB input, while still running end-to-end at over 27 FPS. Through the inherent handling of multiple objects and in- stances and the fused single shot 2D object detection as well as 6D pose estimation, our approach runs even with multiple objects (eight) end-to-end at over 26 FPS, making it highly attractive to many real world scenarios.

FIG.1

## Description

Detecting objects of interest in images is an important task in computer vision and a lot of works in this research field developed highly accurate methods to tackle this prob- lem [1][2][3][4][5]. More recently some works not only focused on the accuracy but also on the efficiency to make their methods applicable in real world scenarios with computational and runtime limitations[6][7]. For example [7] developed a highly scalable and efficient approach, called EfficientDet, that can easily be scaled over a high range of computational resources, speed and accuracy, with a single hyperparameter. But for some tasks like robotic manipulation, autonomous vehicles and augmented reality, it is not enough to detect only the 2D bounding boxes of the objects in an image, but to also estimate their 6D poses. Most of the recent works achieving state-of-the-art accuracy in the field of 6D object pose estimation with RGB input rely on an approach that detects 2D targets, e.g. keypoints, of the objects of interest in the image first and solve for their 6D poses with a PnP-algorithm afterwards [8][9][10][11][12][13]. While they achieve good 6D pose estimation accuracy and since some of them are also relatively fast in terms of single object pose estimation, the run- time linearly increases with the number of objects. This results from the need to compute the 6D pose via PnP for each object individually. Furthermore, some approaches use a pixel-wise RANSAC-based[14] voting scheme to detect the needed keypoints, which also has to be performed for each object separately and therefore can be very time consuming [10][13]. Moreover, some methods need a separate 2D object detector first to localize and crop the bounding boxes of the objects of interest. These cropped image patches subsequently serve as the input of the actual 6D pose estimation approach which means that the whole method needs to be applied for each detected object separately [9][12]. For these reasons, those approaches are not well suited for use cases with multiple objects and runtime limitations, which inhibit their deployment in many real world scenarios.

In this work we propose a new approach which does not encounter these issues and still achieves state-of-the-art performance using RGB input on the widely-used benchmark dataset Linemod [15]. To achieve this, we extend the state- of-the-art 2D object detection architecture family Efficient- Dets in an intuitive way to also predict the 6D poses of ob- jects. Therefore, we add two extra subnetworks to predict the translation and rotation of objects, analogous to the classification and bounding box regression subnetworks. Since these subnets are relatively small and share the computation of the input feature maps with the already existing net-works, we are able to get the full 6D pose very inexpensive without much additional computational costs. Through the seamless integration in the EfficientDet architecture, our approach is also capable of detecting multiple object categories as well as multiple object instances and can estimate their 6D poses - all within a single shot. Because we regress the 6D pose directly, we need no further post-processing steps like RANSAC and PnP. This makes the runtime of our method nearly independent from the number of objects per image.

A key element for our reported state-of-the-art accuracy in terms of the ADD(-S) metric on the Linemod dataset, turned out to be our proposed 6D augmentation which boosts the performance of our approach enormously. This proposed augmentation technique allows direct 6D pose estimation methods like ours, to also use image rotation and scaling which otherwise would lead to a mismatch between image and annotated poses. Such image manipulations can help to significantly improve performance and generalization when dealing with small datasets like Linemod [16][3]. 2D+PnP approaches are able to exploit those methods without much effort because the 2D targets can be relatively easy trans- formed accordingly to the image transformation. Using our proposed augmentation method can help to compensate for that previous advantage of 2D+PnP approaches which arguably could be a reason for the current dominance of those approaches in the field of 6D object pose estimation with RGB input [10][11][13].

Just like the original EfficientDets, our approach is also highly scalable via a single hyperparameter $\varphi$ to adjust the network to a wide range of computational resources, speed and accuracy. Last but not least, because our method needs no further post-processing steps, as already mentioned, and as it is based on an architecture that inherently handles multiple object categories and instances, our approach is relatively easy to use and therefore makes it attractive for many real world scenarios.

To sum it all up, our main contributions in this work are as follows:

- 6 D Augmentation for direct 6D pose estimation approaches to improve performance and generalization, especially when dealing with small datasets.

- Extending the state-of-the-art 2D object detection family of EfficientDets with the additional ability of 6D object pose estimation while keeping their advantages like inherent single shot multi object and instance detection, high accuracy, scalability, efficiency and easy to use.

2. Related Work

In this section we briefly summarize already existing works that are related to our topic. The deep learning based approaches in the research field of 6D pose estimation using RGB input can mostly be assigned to one of the following two categories - estimating the 6D pose directly or first detect 2D targets in the given image and then solve a Perspective-n-Point (PnP) problem for the 6D pose. As our method is based on a 2D object detector, we also shortly summarize related work of this research field.

## 2.1. Direct estimation of the 6D pose

Probably the most straight forward way to estimate an object's 6D pose is to directly regress it. PoseCNN [17] follows this strategy while they internally decouple the translation and rotation estimation part. They also propose a novel loss function to handle symmetric objects since, due to their appearance ambiguities, the network can be penalized unnecessarily during training when not taking their symmetry into account. This loss function is called ShapeMatch-Loss and we base our own loss, described in subsection 3.4, on that function.

Another possibility is to discretize the continuous rotation space into bins and classify them. [18][19] are using this approach. SSD-6D[18] extends the 2D object detector SSD[20] with that ability while AAE[19] aims for learning an implicit rotation representation via auto encoders and as- sign that estimated rotation to a similar rotation vector in a codebook. However, due to the nature of the discretization process, the so obtained poses are very course and have to be further refined in order to get a relatively accurate 6D pose.

## 2.2. 2D Detection and PnP

More recently the state-of-the-art accuracy regime of 6D object pose estimation using RGB input only is dominated by approaches that first detect 2D targets of the object in the given image and subsequently solve a Perspective-n- Point problem for their 6D pose [10][13][11][12][9][21]. This approach can be further split in two categories - keypoint-based [10][13][21][22][23][8] and dense 2D-3D correspondence methods [11][12][9]. The keypoint-based methods predict either the eight 2D projections of the cuboid corners of the 3D model as keypoints [22][23][8] or choose keypoints on the object's surface, often selected with the farthest point sampling algorithm [10][13][21]. Since the cuboid corners are often not on the object's sur- face, those keypoints are usually harder to predict than their surface counterparts, but instead only need the 3D cuboid of the object and not the complete 3D model. Because key- points can also be invisible in the image due to occlusion or truncation, some methods perform a pixel-wise voting scheme where each pixel of the object predicts a vector pointing to the keypoint [10][13]. The final keypoints are estimated using RANSAC[14], which makes it more robust to outliers when dealing with occlusion.

The dense 2D-3D correspondence methods predict the corresponding 3D model point for each 2D pixel of the object. These dense 2D-3D correspondences are either obtained using UV maps [11] or regressing the coordinates in the object's 3D model space [9][12]. The 6D poses are computed afterwards using PnP and RANSAC. DPOD[11] uses an additional refinement network that is fed with the cropped image patch of the object and another image patch that has to be rendered separately using the predicted pose from the first stage and outputs the refined pose.

While those works often report fast inference times for single object pose estimation, due to their indirect pose estimation approach using intermediate representations and computing the 6D pose subsequently for each object independently, the runtime is highly dependent of the number of objects per image. Furthermore, some methods can't handle multiple objects well and need a separate trained model for each object [9][23] or have problems with multiple in- stances in some cases and need additional modifications to handle these scenarios [11]. There are also some methods that rely on an external 2D object detector first to detect the objects of interest in the input image and to operate on these detections separately [12][9]. All these mentioned cases in- crease the complexity of the approaches and limit their applicability in some use cases, especially when multiple objects or instances are involved.

## 2.3. 2D Object Detection

While the development from R-CNN[24] over Fast-R- CNN[25] to Faster-R-CNN[26] led to substantial gains in accuracy and performance in the field of 2D object detection, those so-called two-stage approaches tend to be more complex and not as efficient as one-stage methods [7]. Nevertheless, they usually achieved a higher accuracy under similar computational costs when compared to one-stage methods [4]. The difference between both is that one-stage detectors perform the task in a single shot, while two-stage approaches perform a region proposal step in the first stage and make the final object detection in the second step based on the region proposals. Since [4] closed the accuracy gap, one-stage detectors gained more attention due to their simplicity and efficiency [7]. A common method to push the detection performance further, is to use larger backbone net- works, like deeper ResNet[27] variants or AmoebaNet[28], or to increase the input resolution [29][3]. Yet, with the gains in detection accuracy, the computational costs often significantly increase in parallel, which reduces their applicability to use cases without computational constraints. Therefore, [7] focused not only on accuracy but also on efficiency and brought the idea of the scalable backbone architecture EfficientNet[30] to 2D object detection. The resulting EfficientDet architecture family can be scaled easily with a single hyperparameter over a wide range of computational resources - from mobile size to a huge network achieving state-of-the-art result on COCO test-dev[31]. To introduce those advantages also to the field of 6D object pose estimation, we therefore base our approach on this architecture.

3. Methods

In this section we describe our approach for 6D object pose estimation using RGB images as input. The complete 6D pose is composed of two parts - the 3D rotation $\mathbf{R} \in SO(3)$ of the object and the 3D translation $\mathbf{t} \in R^3$.

This 6D pose represents the rigid transformation from the object coordinate system into the camera coordinate system. Because this overall task involves several subtasks like detecting objects in the 2D image first, handling multiple object categories and instances, etc. which are already solved in recent works from the relatively matured field of 2D object detection, we decided to base our work on such an 2D object detection approach and extend it with the ability to also predict the 6D pose of objects.

3.1. Extending the EfficientDet architecture

Our goal is to extend the EfficientDet architecture in an intuitive way and keep the computational overhead rather small. Therefore, we add two new subnetworks, analogously to the classification and bounding box regression subnetworks, but instead of predicting the class and bounding box offset for each anchor box, the new subnets predict the rotation $\mathbf{R}$ and translation $\mathbf{t}$ respectively. Since those subnets are small and share the input feature maps with the already existing classification and box subnets, the additional computational cost is minimal. Integrating the task of 6D pose estimation via those two subnetworks and using the anchor box mapping and non-maximum-suppression (NMS) of the base architecture to filter out background and multiple detections, we are able to create an architecture that can detect the

- Class

- 2D bounding box

- Rotation

- Translation

of one or more object instances and categories for a given RGB image in a single shot. To maintain the scalability of the underlying EfficientDet architecture, the size of the rotation and translation network is also controlled by the scaling hyperparameter $\varphi$. A high-level view on our architecture is presented inFigure 2. For further information about the base architecture we refer the reader to [7].

3.2. Rotation Network

We choose axis angle representation for the rotation because it needs less parameters and performs slightly better than quaternions in [32]. Yet, this representation is not crucial for our approach and can also be switched if needed.

So instead of a rotation matrix $\mathbf{R} \in SO(3)$ the subnetwork predicts one rotation vector $\mathbf{r} \in R^3$ for each anchor box. The network architecture is similar to the classification and box network in [7] but instead of using the output $\mathbf{r}_{init}$ directly as the regressed rotation, we further add an iterative refinement module, inspired by [33]. This module takes the concatenation along the channel dimension of the current rotation $\mathbf{r}_{init}$ and the output of the last convolution layer the input and regresses $\Delta\mathbf{r}$ so that the final rotation regression is - prior to the initial regression layer which outputs $\mathbf{r}_{init}$ as

$$\mathbf{r} = \mathbf{r}_{init} + \Delta\mathbf{r} \tag{1}$$

The iterative refinement module consists of $D_{iter}$ depth-wise separable convolution layer[34], each layer followed by group normalization [35] and SiLU (swish-1) activation function [36][37][38]. The number of layers $D_{iter}$, dependent by the scaling hyperparameter $\varphi$ is described by the following equation

$$D_{iter}(\phi) = 2 + \lfloor \phi/3 \rfloor \tag{2}$$

Where ⌊⌋ denotes the floor function. These are followed by the output layer - a single depthwise separable outputs to the rotation r, initialized with the output of the base net- work rinit and after each intermediate iteration step r is set to rinit for the next step. Niter is also dependent on φ to preserve the scalability and is defined as follows

$$N_{iter}(\phi) = 1 + \lfloor \phi/3 \rfloor \qquad (3)$$

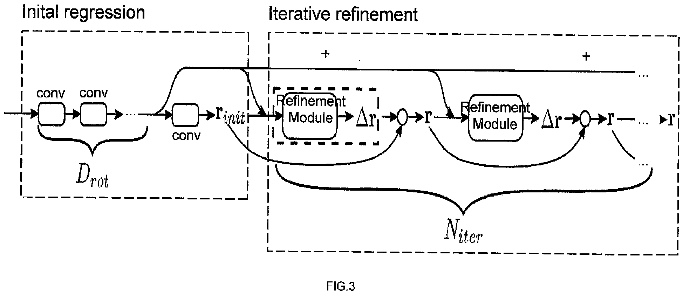

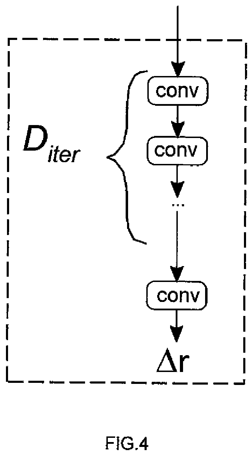

The number of channels for all layers are the same as in the class and box networks, except for the output layers which are determined by the number of anchors and rotation parameters. Equation 2 and Equation 3 are based on the equation for the depth Dbox and Dclass of the box and class networks from [7] but are not backed up with further experiments and could possibly be optimized. The architecture of the complete rotation network is presented in Figure 3, while the detailed topology of the refinement module is shown in Figure 4.

Even though our design of the rotation and translation network, described insubsection 3.3, is based on the box and class network from the vanilla EfficientDet, we replace batch normalization with group normalization to reduce the minimum needed batch size during training [35]. With this replacement we are able to successfully train the rotation and translation network from scratch with a batch size of 1 which heavily reduces the needed amount of memory during training compared to the needed minimum batch size of 32 with batch normalization. We aim for 16 channels per group which works well according to [35] and therefore calculating the number of groups Ngroups as follows

$$N_{groups}(\phi) = \lfloor \frac{W_{bifpn}(\phi)}{16} \rfloor \qquad (4)$$

where $W_{bifpn}$ denotes the number of channels in the EfficientDet BiFPN and prediction networks [7].

3.3. Translation Network

The network topology of the translation network is basically the same as for the rotation network described in subsection 3.2, with the difference of outputting translation $\mathbf{t} \in R^3$ for each anchor box. However, instead of directly regressing all components of the translation vector $\mathbf{t} = (t_x, t_y, t_z)^T$, we adopt the approach of [17] and split the task into predicting the 2D center point $\mathbf{c} = (c_x, c_y)^T$ of the object in pixel coordinates and the distance $t_z$ separately. With the center point $\mathbf{c}$, the distance $t_z$ and the intrinsic camera parameters, the missing components $t_x$ and $t_y$ of the translation $\mathbf{t}$ can be calculated using the following equations assuming a pinhole camera

$$t_x = \frac{(c_x - p_x) \cdot t_z}{f_x} \qquad (5)$$

$$t_y = \frac{(c_y - p_y) \cdot t_z}{f_y} \qquad (6)$$

where $\mathbf{p} = (p_x, p_y)^T$ is the principal point and $f_x$ and $f_y$ are the focal lengths.

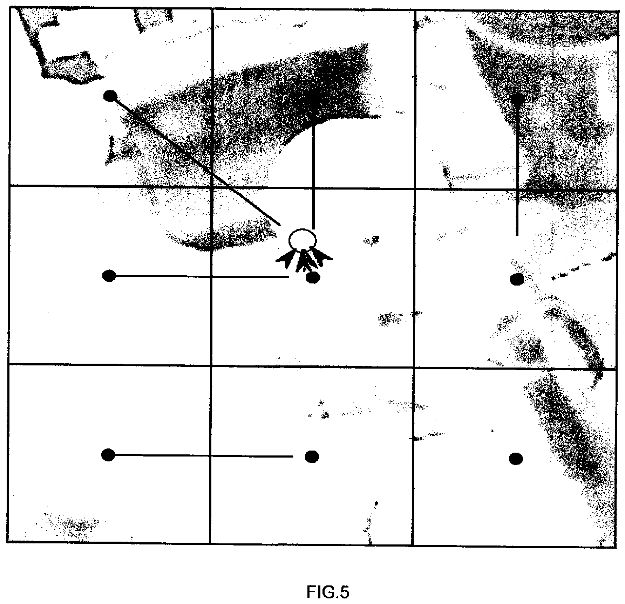

For each anchor box we predict the offset in pixels from the center of this anchor box to the center point c of the corresponding object. This is equivalent to predicting the offset to the center point from the current point in the given feature map, as illustrated in Figure 5. To maintain the relative spatial relations, the offset is normalized with the stride of the input feature map from every level of the feature pyramid. Using the

- predicted relative offsets,

- the coordinate maps **X** and **Y** of the feature maps where every point contains its own x and y coordinate respectively

- and the strides,

the absolute coordinates of the center point c can be calculated. Our intention here is that it might be easier for the network to predict the relative offset at each point in the feature maps instead of directly regressing the absolute coordinates cx and cy due to the translational invariance of the convolution. We also verified this assumption experimentally.

TensorFlow[39] layers to avoid extra post-processing steps and to enable GPU or TPU acceleration, while keeping the architecture as simple as possible. As mentioned earlier, the calculation of t also needs the intrinsic camera parameters □ which is the reason why there is another input layer needed for the translation network. This input layer provides a vector a R6 for each input image which contains the focal lengths fx and fy of the pinhole camera, the principal point coordinates px and py and finally an optional translation scaling factor translation and the image scale image.

The translation scaling factor translation can be used to adjust the translation unit, e.g. from mm to m. The image scale image is the scaling factor from the original image size to the input image size which is needed to rescale the predicted center point c to the original image resolution to apply Equation 5 and Equation 6 for recovering t.

3.4. Transformation Loss

For asymmetric objects our loss $L_{asym}$ is defined as follows

$$L_{asym} = \frac{1}{m} \sum_{\mathbf{x} \in \mathcal{M}} \| (\text{Rot}(\tilde{\mathbf{r}}, \mathbf{x}) + \tilde{\mathbf{t}}) \\ - (\text{Rot}(\mathbf{r}, \mathbf{x}) + \mathbf{t}) \|_2, \tag{7}$$

whereby Rot(**r**, **x**) and Rot($\tilde{\mathbf{r}}$, **x**) respectively indicate the rotation of **x** with the ground truth rotation **r** and the estimated rotation $\tilde{\mathbf{r}}$ by applying the Rodrigues' rotation formula [40][41]. Furthermore, M denotes the set of the object's 3D model points and m is the number of points. The loss function basically performs the transformation of the object of interest with the ground truth 6D pose and the estimated 6D pose and then calculates the mean point distances between the transformed model points which is identical to the ADD metric described in subsection 4.2. This approach has the advantage that the model is directly optimized on the metric with which the performance is measured. It also eliminates the need of an extra hyperparameter to balance the partial losses when the rotation and translation losses are calculated independently from each other.

To also handle symmetric objects, the corresponding loss $L_{sym}$ is given by the following equation

$$L_{sym} = \frac{1}{m} \sum_{\mathbf{x}_1 \in \mathcal{M}} \min_{\mathbf{x}_2 \in \mathcal{M}} \| (\text{Rot}(\tilde{\mathbf{r}}, \mathbf{x}_1) + \tilde{\mathbf{t}}) \\ - (\text{Rot}(\mathbf{r}, \mathbf{x}_2) + \mathbf{t}) \|_2 \tag{8}$$

which is similar to L*asym* but instead of strictly calculating the distance between the matching points of the two transformed point sets, the minimal distance for each point to any point in the other transformed point set is taken into account. This helps to avoid unnecessary penalization during training when dealing with symmetric objects as described in [17].

from the 2D center point c and the depth tz, as well as the absolute center point coordinates cx and cy from their count. For asymmetric objects our loss $L_{asym}$ is defined as follows

$$L_{trans} = \begin{cases} L_{sym} & \text{if symmetric,} \\ L_{asym} & \text{if asymmetric.} \end{cases} \tag{9}$$

The loss function we use is based on the PoseLoss and ShapeMatch-Loss from [17] but instead of considering only the rotation, our approach takes also the translation into ac- Lasym if asymmetric.

3.5. 6D Augmentation

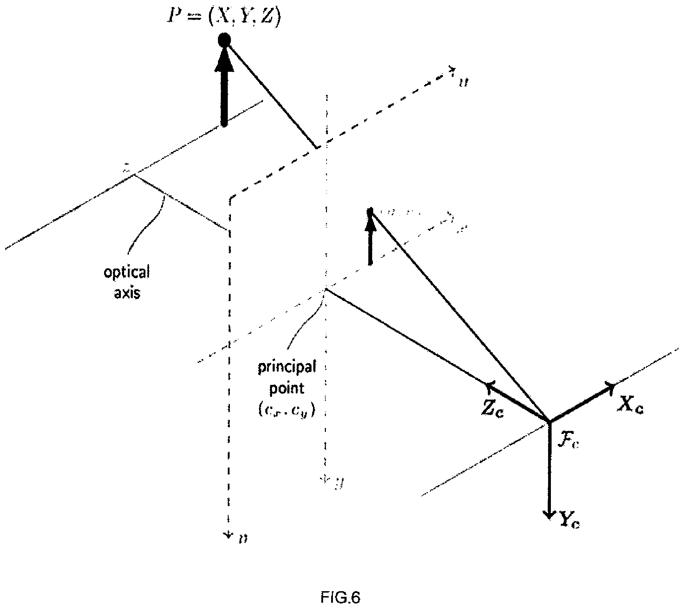

The Linemod[15] and Occlusion[42] datasets used in this work are very limited in the amount of annotated data. Linemod roughly consists of about 1200 annotated examples per object and Occlusion is a subset of Linemod where all objects of a single scene are annotated so the amount of data is equally small. This makes it especially hard for large neural networks to converge to more general solutions. Data augmentation can help a lot in such scenarios[16][3] and methods which rely on any 2D detection and PnP approach have a great advantage here. Such methods can easily use image manipulation techniques like rotation, scaling, shearing etc. because the 2D targets, e.g. keypoints, can be relatively easy transformed according to the image transformation. Approaches that directly predict the 6D pose of an object are limited in this aspect because some image trans- formations, like rotation for example, lead to a mismatch between image and ground truth 6D pose. To overcome this issue, we developed a 6D augmentation that is able to rotate and scale an image randomly and transform the ground truth 6D poses so they still match to the augmented image. As can be seen in Figure 6, when performing a 2D rota-$\theta$ [0°, 360°), the 3D rotation R and translation t of the tion of the image around the principal point with an angle 6D pose also have to be rotated with $\theta$ around the z-axis. rotation vector $\Delta r$ in axis angle representation as follows This rotation around the z-axis can be described with the

$$\Delta \mathbf{r} = (0, 0, \frac{\theta}{180 \cdot \pi})^T. \qquad (10)$$

$$\theta$$

Using the rotation matrix $\Delta \mathbf{R}$ obtained from $\Delta r$, the augmented rotation matrix $R_{aug}$ and translation $t_{aug}$ can be computed with the following equations

$$\mathbf{R}_{aug} = \Delta \mathbf{R} \cdot \mathbf{R} \qquad (11)$$

$$\mathbf{t}_{aug} = \Delta \mathbf{R} \cdot \mathbf{t} \qquad (12)$$

$$\mathbf{t}_{aug} = (t_x, t_y, \frac{t_z}{f_{scale}})^T. \qquad (13)$$

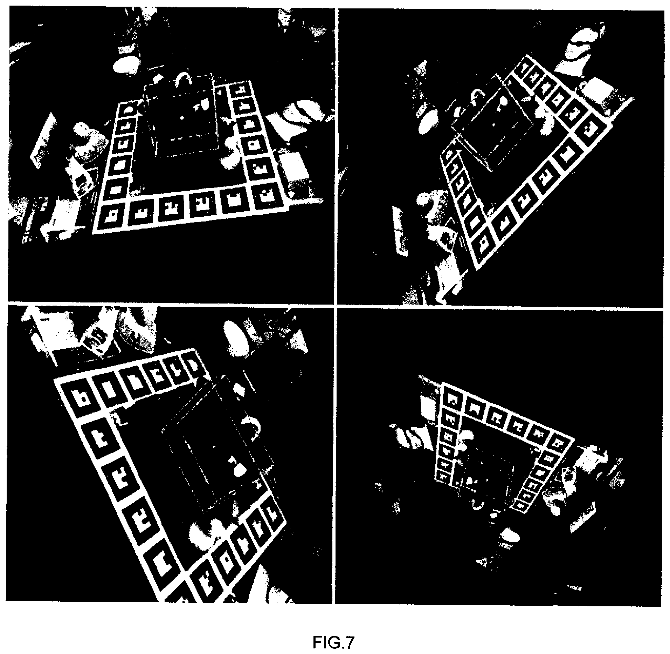

It has to be mentioned that the scaling augmentation introduces an error if the object of interest is not in the image center. When rescaling the image, the 2D projection of the object remains the same it only becomes bigger or smaller. However, when moving the object along the z-axis in reality, the view from the camera to the 3D object would change and so the projection onto the 2D image plane. Nevertheless, the benefits from the additional data obtained with this augmentation technique strongly outweigh its introduced error as shown in subsection 4.7. Figure 7 contains some examples where the top left image is the original image with the ground truth 6D pose and the other images are augmented with the method described in this subsection. In Using the rotation matrix $\Delta \mathbf{R}$ obtained from $\Delta r$, the augmented rotation matrix $\mathbf{R}_{aug}$ and translation $\mathbf{t}_{aug}$ can be computed with the following equations

$$\mathbf{R}_{aug} = \Delta \mathbf{R} \cdot \mathbf{R} \qquad (11)$$

$$\mathbf{t}_{aug} = \Delta \mathbf{R} \cdot \mathbf{t} \qquad (12)$$

To handle image scaling as an additional augmentation the translation $\mathbf{t} = (t_x, t_y, t_z)^T$ . Rescaling the image with technique as well, we need to adjust the $t_z$ component of formly sampled from the interval [0°, 360°) and a random scaling factor $f_{scale}$, uniformly sampled from [0.7, 1.3]. this work we use for all experiments a random angle $\theta$, uni-

3.6. Color space Augmentation

We also use several augmentation techniques in the color space that can be applied without further need to ad- just the annotated 6D poses. For this task we adopt the Rand Augment[16] method which is a learned augmentation that is able to boost performance and enhance generalization among several datasets and models. It consists of multiple augmentation methods, like adjusting the contrastand brightness of the input image, and can be tuned with two parameters - the number n of applied image transformations and the strength m of these transformations.

As mentioned earlier, some image transformations like rotation and shearing lead to a mismatch between the input image and the ground truth 6D poses, so we remove those augmentation techniques from the RandAugment method. We further add gaussian noise to the selection. To maintain the approach of setting the augmentation strength with the from a normal distribution with the range [0,$\underline{m}$ 255]. parameter m, the channel-wise additive gaussian noise is sampled from an integer uniform distribution [1, 3] and m from For all our experiments we choose n randomly sampled [1, 14] for each image.

4. Experiments

In this section we describe the experiments we did, our experimental setup with implementation details as well as the evaluation metrics we use. In case of the Linemod experiment, we also compare our results to current state-of-the-art methods. Please note that our approach can be scaled from $\varphi = 0$ to $\varphi = 7$ in integer steps but due to computable in this scene are additionally annotated. These objects are partially heavily occluded which makes it challenging to estimate their 6D poses. We use this dataset to evaluate our method's ability for multi object 6D pose estimation. Therefore, we trained a single model on the Occlusion dataset. We use the same train and test split as for the corresponding Linemod scene. The results of this experiment are presented in subsection 4.5.

Please note that the evaluation convention in other works [17][10] is to use the Linemod dataset for training and the complete Occlusion data as the test set, so this experiment is not comparable with those works.

4.1. Datasets

We evaluate our approach on two popular benchmark datasets which are described in this subsection.

4.1.1 Linemod

The Linemod[15] dataset is a popular and widely-used benchmark dataset for 6D object pose estimation. It consists of 13 different objects (actually 15 but only 13 are used in most other works [8][9][10][11][12][13]) which are placed in 13 cluttered scenes. For each scene only one object is an- notated with it's 6D pose although other objects are visible at the same time. So despite of our approach being able to detect multiple objects and to estimate their poses, we had to train one model for each object. There are about 1200 annotated examples per object and we use the same train and test split as other works [44][10][8] for fair comparison. This split selects training images so the object poses got a minimum angular distance of 15°, which results in about 15% training images and 85% test images. Further- more, we do not use any synthetically rendered images for training. We compare our results with state-of-the-art methods in subsection 4.4.

4.1.2 Occlusion

The Occlusion dataset is a subset of Linemod and consists of a single scene of Linemod where eight other objects vis-ible in this scene are additionally annotated. These objects are partially heavily occluded which makes it challenging to estimate their 6D poses. We use this dataset to evaluate our method's ability for multi object 6D pose estimation. Therefore, we trained a single model on the Occlusion dataset. We use the same train and test split as for the corresponding Linemod scene. The results of this experiment are presented in subsection 4.5.

Please note that the evaluation convention in other works [17][10] is to use the Linemod dataset for training and the complete Occlusion data as the test set, so this experiment is not comparable with those works.

4.2. Evaluation metrics

We evaluate our approach with the commonly used ADD(-S) metric[45]. This metric calculates the average point distances between the 3D model point set trans formed with the ground truth rotation **R** and translation **t** and the model point set transformed with the estimated rotation $\tilde{\mathbf{R}}$ and translation $\tilde{\mathbf{t}}$. It also differs between asymmetric and symmetric objects. For asymmetric objects the ADD metric is defined as follows: tional constraints, we only use $\varphi = 0$

and φ = 3 in our experiments.

$$\mathrm{ADD} = \frac{1}{m} \sum_{\mathbf{x} \in \mathcal{M}} \|(\mathbf{Rx} + \mathbf{t}) - (\tilde{\mathbf{R}}\mathbf{x} + \tilde{\mathbf{t}})\|_2. \qquad (14)$$

An estimated 6D pose is considered correct if the average point distance is smaller than 10% of the objects diameter. Symmetric objects are evaluated using the ADDS metric which is given by the following equation

$$\mathrm{ADD\text{-}S} = \frac{1}{m} \sum_{\mathbf{x_1} \in \mathcal{M}} \min_{\mathbf{x_2} \in \mathcal{M}} \|(\mathbf{Rx} + \mathbf{t}) \\ - (\tilde{\mathbf{R}}\mathbf{x} + \tilde{\mathbf{t}})\|_2. \qquad (15)$$

The Linemod[15] dataset is a popular and widely-used benchmark dataset for 6D object pose estimation. It consists of 13 different objects (actually 15 but only 13 are used in most other works [8][9][10][11][12][13]) which are placed in 13 cluttered scenes. For each scene only one object is an- notated with it's 6D pose although other objects are visible at the same time. So despite of our approach being able to detect multiple objects and to estimate their poses, we had to train one model for each object. There are about 1200 annotated examples per object and we use the same train

$$\mathrm{ADD\text{-}S} = \frac{1}{m} \sum_{\mathbf{x_1} \in \mathcal{M}} \min_{\mathbf{x_2} \in \mathcal{M}} \|(\mathbf{Rx} + \mathbf{t}) \\ - (\tilde{\mathbf{R}}\mathbf{x} + \tilde{\mathbf{t}})\|_2. \qquad (15)$$

$$\mathrm{ADD(\text{-}S)} = \begin{cases} \mathrm{ADD} & \text{if asymmetric,} \\ \mathrm{ADD\text{-}S} & \text{if symmetric.} \end{cases} \qquad (16)$$

4.3. Implementation Details

We use the Adam optimizer[46] with an initial learning rate of 1e-4 for all our experiments and a batch size of 1. We also use gradient norm clipping with a threshold of 0.001 to increase training stability. The learning rate is reduced with a factor of 0.5 if the average point distance does not decrease within the last 25 evaluations on the test set. The minimum learning rate is set to 1e-7. Since the training set of Linemod and Occlusion is very small (roughly 180 examples per object), as mentioned in subsubsection 4.1.1 and subsubsection 4.1.2, we evaluate our model only every 10 epochs to measure training progression. Our model is trained for 5000 epochs. The complete loss function L is composed of three parts - the classification loss $L_{class}$, the bounding box regression loss $L_{bbox}$ and the transformation loss $L_{trans}$. To balance the influence of these partial losses on the training procedure, we introduce a hyperparameter λ for each partial loss, so the final loss L is defined as follows

$$L = \lambda_{class} \cdot L_{class} + \lambda_{bbox} \cdot L_{bbox} + \lambda_{trans} \cdot L_{trans} \qquad (17)$$

We found that $\lambda_{class} = \lambda_{bbox} = 1$ and $\lambda_{trans} = 0.02$ performs well in our experiments. To calculate the transformation loss Ltrans, described in subsection 3.4, we use m = 500 points of the 3D object model point set.
We use our 6D and color space augmentation by default with the parameters mentioned in subsection 3.5 and sub- section 3.6 respectively but randomly skip augmentation with a probability of 0.02 to also include examples from the original image domain in our training process.

We initialize the neural network, except the rotation and translation network, with COCO[31] pretrained weights from the vanilla EfficientDet[7]. Because of our small batch size, we freeze all batch norm layers during training and use the population statistics learned from COCO.

4.4. Comparison on Linemod

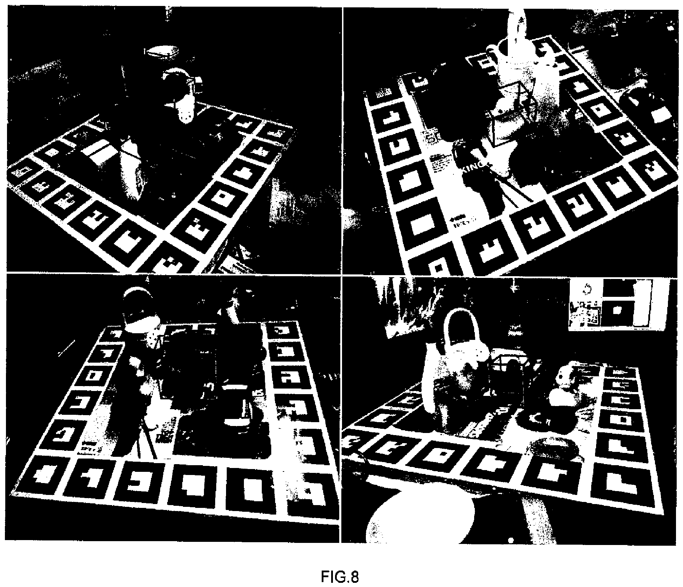

In Table 1we compare our results with current state-of-the-art methods using RGB input on the Linemod dataset in terms of the ADD(-S) metric. Our approach outperforms all other methods without further refinement steps by a large margin. Even DPOD+ which uses an additional refinement network and reported the best results on Linemod so far using only RGB input data, is outperformed considerably by our method, roughly halving the remaining error. Note again that, in contrast to all other recent works in Table 1 [8][9][10][11][12][13], our approach does not use any additional refinement methods and detects and estimates objects with their 6D poses in a single shot without the need of further post-processing steps like RANSAC-based voting or PnP. This fact demonstrates the current domination on Linemod of RGB-only approaches detecting 2D targets, e.g. keypoints, first and solve the 6D pose via PnP algorithm afterwards. Since a crucial part of our reported performance on Linemod is our proposed 6D augmentation, as can be seen in subsection 4.7, the question arises if the previous superiority of 2D+PnP approaches over direct 6D pose estimation, comes from the broader use of some augmentation techniques like rotation, to better enrich the small Linemod dataset. To the best of our knowledge, our approach is the first holistic method achieving competitive performance on Linemod with current state-of-the-art approaches, like [10], [11] and [13]. We therefore demonstrated that single shot direct 6D object pose estimation approaches are able to compete in terms of accuracy with 2D+PnP approaches and even with additional refinement methods. Figure 8 shows some qualitative results of our method.

Interestingly the performance of our $\varphi = 0$ and $\varphi = 3$ mod- ties. This suggests that the capacity of our $\varphi = 0$ mode Is are nearly the same, despite of their different capacity is already enough for the single object 6D pose estimation amount of data. Additionally, the small $\varphi = 0$ model may task on Linemod and the bottleneck seems to be the small which could be an explanation why the $\varphi = 0$ model per- not suffer from overfitting as much as the larger models larger $\varphi = 3$ model comes much more into account for the forms slightly better on some objects. The advantage of the task of multi object 6D pose estimation as we demonstrate in subsection 4.5.

4.5. Multi object pose estimation

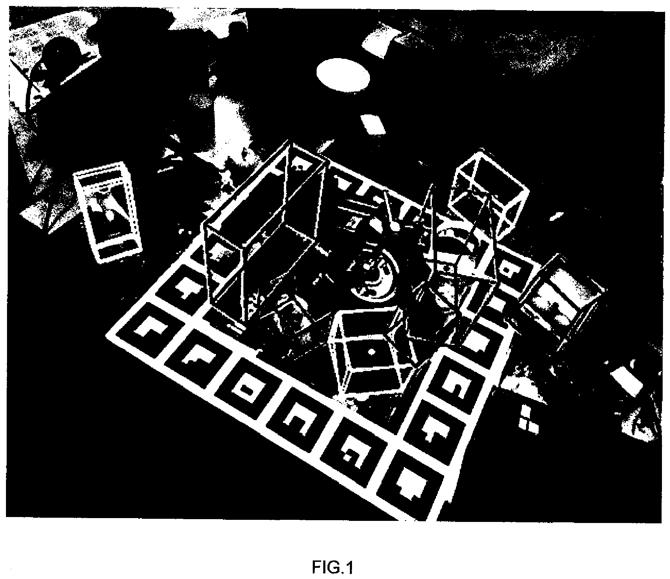

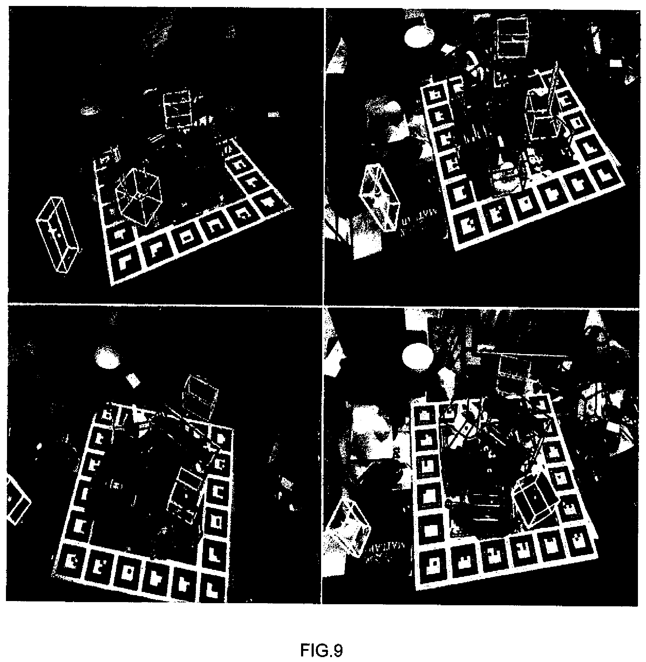

To validate that our approach is really capable of handling multiple objects in practice, we also trained a single model on Occlusion. Because of the reasons explained in subsubsection 4.1.1, we could not use the Linemod data of the objects for training like other works did [10][17] and had to train our model on the Occlusion dataset. Therefore, we used the train and test split of the corresponding Linemod scene. So please note that due to the different train and test data of this experiment, the reported results are not comparable to the results of other works [10][17]. Training parameters remain the same as described in subsection 4.3. The results in Table 2suggest that our method is indeed able to detect and estimate the 6D poses of multiple objects in a single shot. Figure 1 and Figure 9 are showing some examples with ground truth and estimated 6D poses of the Occlusion test set for qualitative evaluation. Interestingly the performance difference in terms of the ADD(-S) metric between the $\varphi = 0$ and $\varphi = 3$ model is quiet significant, unlike the Linemod experiment in subsection 4.4. We argue that the capacity of the $\varphi = 3$ model. On top of that, the objects in this larger number of objects benefits more from the higher ca- dataset often deal with severe occlusions which makes the 6D pose estimation task at the same time more challenging than on Linemod.

4.6. Runtime analysis

In this subsection we examine the average runtime of our approach in several scenarios and compare it with the vanilla EfficientDet[7]. The experiments were performed using the $\varphi = 0$ and $\varphi = 3$ model to study the influence of the scaling hyperparameter $\varphi$. For each model we measured the runtime for single and multi object 6D pose estimation. To examine the single object task, we use the Linemod test dataset and for the latter the Occlusion test dataset because it typically contains eight annotated objects per image. All experiments were performed using a batch size of 1. We measured the time needed to

- preprocess the input data (Preprocessing),

- the pure network inference time (Network)

- and finally the complete end-to-end time including the data preprocessing, network inference with non- maximum-suppression and post-processing steps like rescaling the 2D bounding boxes to the original image resolution (end-to-end).

To make a fair comparison with the vanilla EfficientDet, we use the same implementation on which our EfficientPoseimplementation is based on and also use the same weights so that the 2D detection remains identical. The results of these experiments are reported in Table 3.

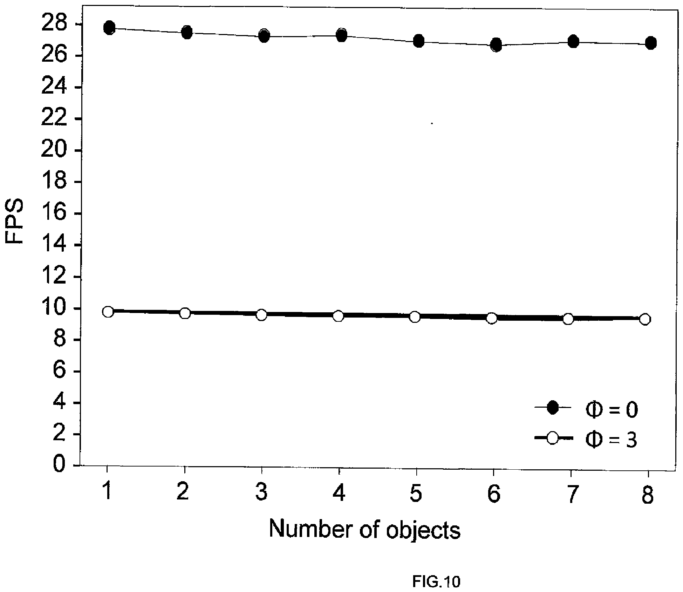

For a more fine grained evaluation, we performed a separate experiment in which we measured the runtime in dependency of the number of objects per image. Therefore we used the Occlusion test set and cut out objects using the ground truth segmentation mask if necessary to match the target number of objects per image. Using this method we then iteratively measured the end-to-end runtime of the complete occlusion test set from a single object up to eight objects. To ensure a correct measuring, we filtered out images in which our model did not detect the estimated number of objects. The results of this experiment are visualized in Figure 10.

All experiments are run on the same machine with an i7-6700K CPU and a 2080 Ti GPU using Tensorflow 1.15.0, CUDA 10.0 and CuDNN 7.6.5.

Our $\varphi = 0$ model runs end-to-end with an average 27.45 FPS at the single object 6D pose estimation task which makes it suitable for real time applications. Even more promising is the average end-to-end runtime of 26.22 FPS when performing multi object 6D pose estimation on the Occlusion test dataset which typically contains eight objects per image.

Using the much larger $\varphi = 3$ model, our method still runs end-to-end at over 9 FPS while the difference between single and multi object 6D pose estimation nearly vanishes with 9.43 vs. 9.34 FPS. Figure 10 also demonstrates that the runtime of our approach is nearly independent from the number of objects per image. These results show the advantage of our method in multi object 6D pose estimation compared to the 2D detection approaches solving a PnP problem to obtain the 6D poses afterwards, which linearly increases the runtime with the number of objects. This makes our single shot approach very attractive for many real world scenarios, no matter if there are one or more objects to detect and estimate their 6D poses.

and our approach with roughly 35 vs. 27 FPS using $\varphi = 0$ and 12 vs. 9 FPS with the $\varphi = 3$ model, our extension of When comparing the runtimes of the vanilla EfficientDet the EfficientDet architecture as described in subsection 3.1, seems computationally very efficient considering this rather small drop of frame rates in exchange for the additional ability of full 6D pose estimation.

4.7. Ablation study

mentation, described in subsection 3.5, we trained a $\varphi = 0$ To demonstrate the importance of our proposed 6D aug-model with and without the 6D augmentation. To gain further insights into the influence of the rotation and scaling part respectively, we also performed experiments in which only one part of the augmentation is used. The color space augmentation is applied in all the experiments to isolate the effect of the 6D augmentation. Due to computational constraints, we performed these experiments only on the driller object from Linemod.

As can be seen from the results in Table 4, the 6D augmentation is a key element in our approach and boosts the performance significantly from ?% without 6D augmentation to ?% in terms of ADD metric. Furthermore, the results from the experiments using only one part of the 6D augmentation (only scale or only rotation) show very similar improvements which suggests that they contribute equally to the overall effectiveness of the 6D augmentation.

4. Conclusion

In this paper we introduce EfficientPose, a highly scalable end-to-end 6D object pose estimation approach that is based on the state-of-the-art 2D object detection architecture family EfficientDet[7]. We extend the architecture in an intuitive and efficient way to maintain the advantages of the base network and to keep the additional computational costs low while performing not only 2D object detection but also 6D object pose estimation of multiple objects and in- stances - all within a single shot. Our approach achieves a new state-of-the-art result on the widely-used benchmark dataset Linemod while still running end-to-end at over 27 FPS. We thus state that holistic approaches for direct 6D object pose estimation can compete in terms of accuracy with 2D+PnP methods under similar training data conditions - a gap that we close with our proposed 6D augmentation. Moreover, in contrast to 2D+PnP approaches, the runtime of our method is also nearly independent from the number of objects which makes it suitable for real world scenarios, like robotic grasping or autonomous driving, where multiple objects are involved and real-time constraints are given.

References

[1] S. Qiao, L.-C. Chen, and A. Yuille, "Detectors: Detecting objects with recursive feature pyramid and switchable atrous convolution," 2020.

[2] X. Du, T.-Y. Lin, P. Jin, G. Ghiasi, M. Tan, Y. Cui, Q. V. Le, and X. Song, "Spinenet: Learning scale- permuted backbone for recognition and localization," 2020.

[3] B. Zoph, E. D. Cubuk, G. Ghiasi, T.-Y. Lin, J. Shlens, and Q. V. Le, "Learning data augmentation strategies for object detection," 2019.

[4] T.-Y. Lin, P. Goyal, R. Girshick, K. He, and P. Doll ár, "Focal loss for dense object detection," 2018.

[5] S. Ren, K. He, R. Girshick, and J. Sun, "Faster r-cnn: Towards real-time object detection with region proposal networks," 2016.

[6] C.-Y. Wang, H.-Y. M. Liao, I.-H. Yeh, Y.-H. Wu, P.-Y. Chen, and J.-W. Hsieh, "Cspnet: A new backbone that can enhance learning capability of cnn," 2019.

[7] M. Tan, R. Pang, and Q. V. Le, "Efficientdet: Scalable and efficient object detection," 2020 IEEE/CVF Conference on Computer Vision and Pattern Recognition (CVPR), Jun 2020.

[8] B. Tekin, S. N. Sinha, and P. Fua, "Real-time seamless single shot 6d object pose prediction," 2018.

[9] K. Park, T. Patten, and M. Vincze, "Pix2pose: Pixel- wise coordinate regression of objects for 6d pose estimation," 2019 IEEE/CVF International Conference on Computer Vision (ICCV), Oct 2019.

[10] S. Peng, Y. Liu, Q. Huang, H. Bao, and X. Zhou, "Pvnet: Pixel-wise voting network for 6dof pose estimation," 2018.

[11] S. Zakharov, I. Shugurov, and S. Ilic, "Dpod: 6d pose object detector and refiner," 2019.

[12] Z. Li, G. Wang, and X. Ji, "Cdpn: Coordinates-based disentangled pose network for real-time rgb-based 6- dof object pose estimation," in 2019 IEEE/CVF International Conference on Computer Vision (ICCV), pp. 7677-7686, 2019.

[13] C. Song, J. Song, and Q. Huang, "Hybridpose: 6d object pose estimation under hybrid representations," 2020.

[14] M. A. Fischler and R. C. Bolles, "Random sample consensus: A paradigm for model fitting with applications to image analysis and automated cartography," Commun. ACM, vol. 24, p. 381-395, June 1981.

[15] S. Hinterstoisser, S. Holzer, C. Cagniart, S. Ilic, K. Konolige, N. Navab, and V. Lepetit, "Multimodal templates for real-time detection of texture-less objects in heavily cluttered scenes," in Proceedings of the 2011 International Conference on Computer Vision, ICCV'11, (USA), p. 858-865, IEEE Computer Society, 2011.

[16] E. D. Cubuk, B. Zoph, J. Shlens, and Q. V. Le, "Randaugment: Practical automated data augmentation with a reduced search space," 2019.[17]Y. Xiang, T. Schmidt, V. Narayanan, and D. Fox, "Posecnn: A convolutional neural network for 6d object pose estimation in cluttered scenes," 2018.

[18] W. Kehl, F. Manhardt, F. Tombari, S. Ilic, and N. Navab, "Ssd-6d: Making rgb-based 3d detection and 6d pose estimation great again," 2017.

[19] M. Sundermeyer, Z.-C. Marton, M. Durner, M. Brucker, and R. Triebel, "Implicit 3d orientation learning for 6d object detection from rgb images," 2019.

[20] W. Liu, D. Anguelov, D. Erhan, C. Szegedy, S. Reed, C.-Y. Fu, and A. C. Berg, "Ssd: Single shot multi- box detector," Lecture Notes in Computer Science, p. 21-37, 2016.

[21] B. Chen, A. Parra, J. Cao, N. Li, and T.-J. Chin, "End- to-end learnable geometric vision by backpropagating pnp optimization," 2020.

[22] M. Rad and V. Lepetit, "Bb8: A scalable, accurate, robust to partial occlusion method for predicting the 3d poses of challenging objects without using depth," 2018.

[23] J. Tremblay, T. To, B. Sundaralingam, Y. Xiang, D. Fox, and S. Birchfield, "Deep object pose estimation for semantic robotic grasping of household objects," 2018.

[24] R. Girshick, J. Donahue, T. Darrell, and J. Malik, "Rich feature hierarchies for accurate object detection and semantic segmentation," 2014.

[25] R. Girshick, "Fast r-cnn," 2015.

[26] S. Ren, K. He, R. Girshick, and J. Sun, "Faster r-cnn: Towards real-time object detection with region proposal networks," 2016.

[27] K. He, X. Zhang, S. Ren, and J. Sun, "Deep residual learning for image recognition," 2015.

[28] E. Real, A. Aggarwal, Y. Huang, and Q. V. Le, "Regularized evolution for image classifier architecture search," 2019.

[29] J. Redmon and A. Farhadi, "Yolov3: An incremental improvement," 2018.

[30] M. Tan and Q. V. Le, "Efficientnet: Rethinking model scaling for convolutional neural networks," 2020.

[31] T.-Y. Lin, M. Maire, S. Belongie, L. Bourdev, R. Gir- shick, J. Hays, P. Perona, D. Ramanan, C. L. Zitnick, and P. Dollár, "Microsoft coco: Common objects in context," 2015.

[32] S. Mahendran, H. Ali, and R. Vidal, "3d pose regression using convolutional neural networks," 2017.

[33] A. Kanazawa, M. J. Black, D. W. Jacobs, and J. Malik, "End-to-end recovery of human shape and pose," 2018.

[34] F. Chollet, "Xception: Deep learning with depthwise separable convolutions," 2017.

[35] Y. Wu and K. He, "Group normalization," 2018. [36]P. Ramachandran, B. Zoph, and Q. V. Le, "Searching for activation functions," 2017.

[37] S. Elfwing, E. Uchibe, and K. Doya, "Sigmoid- weighted linear units for neural network function ap- proximation in reinforcement learning," 2017.

[38] D. Hendrycks and K. Gimpel, "Gaussian error linear units (gelus)," 2020.

[39] M. Abadi, A. Agarwal, P. Barham, E. Brevdo, Z. Chen, C. Citro, G. S. Corrado, A. Davis, J. Dean, M. Devin, S. Ghemawat, I. Goodfellow, A. Harp, G. Irving, M. Isard, Y. Jia, R. Jozefowicz, L. Kaiser, M. Kudlur, J. Levenberg, D. Mane, R. Monga, S. Moore, D. Murray, C. Olah, M. Schuster, J. Shlens, B. Steiner, I. Sutskever, K. Talwar, P. Tucker, V. Van- houcke, V. Vasudevan, F. Viégas, O. Vinyals, P. War- den, M. Wattenberg, M. Wicke, Y. Yu, and X. Zheng, "TensorFlow: Large-scale machine learning on heterogeneous systems," 2015. Software available from tensorflow.org.

[40] J. S. Dai, "Euler-rodrigues formula variations, quaternion conjugation and intrinsic connections," Mechanism and Machine Theory, vol. 92, pp. 144 - 152, 2015.

[41] tfg.geometry.transformation.axis angle.rotate, accessed September 29, 2020. https: //www.tensorflow.org/graphics/ api_docs/python/tfg/geometry/ transformation/axis_angle/rotate.

[42] E. Brachmann, A. Krull, F. Michel, S. Gumhold, J. Shotton, and C. Rother, "Learning 6d object pose estimation using 3d object coordinates," in Computer Vision - ECCV 2014 (D. Fleet, T. Pajdla, B. Schiele, and T. Tuytelaars, eds.), (Cham), pp. 536-551, Springer International Publishing, 2014.

[43] Camera Calibration and 3D Reconstruction, accessed September 29, 2020. https: //docs.opencv.org/2.4/modules/ calib3d/doc/camera_calibration_and_3d_reconstruction.html.

[44] E. Brachmann, F. Michel, A. Krull, M. Y. Yang, S. Gumhold, and C. Rother, "Uncertainty-driven 6d pose estimation of objects and scenes from a single rgb image," in 2016 IEEE Conference on Computer Vision and Pattern Recognition (CVPR), pp. 3364-3372, 2016.

[45] S. Hinterstoisser, V. Lepetit, S. Ilic, S. Holzer, G. Bradski, K. Konolige, and N. Navab, "Model based training, detection and pose estimation of texture-less 3d objects in heavily cluttered scenes," in Computer Vision - ACCV 2012 (K. M. Lee, Y. Matsushita, J. M. Rehg, and Z. Hu, eds.), (Berlin, Heidelberg), pp. 548- 562, Springer Berlin Heidelberg, 2013.

[46] D. P. Kingma and J. Ba, "Adam: A method for stochastic optimization," 2017.

Definitions of the drawings and tables

Figure 1. Example prediction for qualitative evaluation of our $\varphi = 0$ model performing single shot 6D multi object pose estimation on the Occlusion test set while running end-to-end at over 26 FPS. Green 3D bounding boxes visualize ground truth poses while our estimated poses are represented by the other colors.

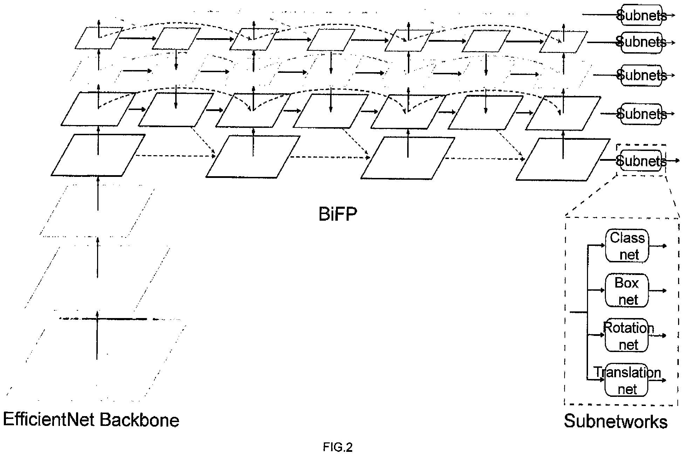

Figure 2. Schematic representation of our EfficientPose architecture including the EfficientNet backbone, BiFPN and the prediction sub- networks.

Figure 3. Rotation network architecture with the initial regression and iterative refinement module. Each conv block consists of a depthwise separable convolution layer, followed by group normalization and SiLU activation.

Figure 4. Architecture of the rotation refinement module. Each conv block consists of a depthwise separable convolution layer, followed by group normalization and SiLU activation.

Figure 5. Illustration of the 2D center point estimation process. The target for each point in the feature map is the offset from the current location to the object's center point.

Figure 6. Reprinted from [43]. Schematic figure of a pinhole cam- era illustrating the projection of a 3D point onto the 2D image plane.

Figure 7. Some examples of our proposed 6D augmentation. The image top left is the original image with the projected object cuboid, transformed with the ground truth 6D pose. The other images are obtained through augmenting the image and the 6D poses separately from each other and then transforming the ob- ject's cuboid with the augmented 6D poses and finally project each cuboid onto the corresponding augmented image.

Figure 8. Some example predictions for qualitative evaluation of our $\varphi = 0$ model on the Linemod test dataset. Green 3D bounding boxes visualize ground truth poses while our estimated poses are represented by blue boxes.

Figure 9. Qualitative evaluation of our single $\varphi = 0$ model's ability for estimating 6D poses of multiple objects in a single shot. Green 3D bounding boxes visualize ground truth poses while our estimated poses are represented by the other colors.

Figure 10. Average end-to-end runtimes in FPS of our $\varphi = 0$ and $\varphi = 3$ model on the Occlusion test set in dependency of the num- ber of objects per image. Shaded areas represent the standard de- viations.

Table 1. Quantitative evaluation and comparison on the Linemod dataset in terms of the ADD(-S) metric. Symmetric objects are marked with * and approaches marked with + are using an additional refinement method.

Table 2. Quantitative evaluation in terms of the ADD(-S) metric for the task of multi object 6D pose estimation using a single model on the Occlusion dataset. Symmetric objects are marked with *

Table 3. Runtime analysis and comparison of our method performing single and multiple object pose estimation using different scales. For single object 6D pose estimation the Linemod dataset is used while for multi object pose estimation the Occlusion dataset is used, which contains usually eight annotated objects per image. We further compare our method's runtime with the vanilla EfficientDet[7] to measure the influence of our 6D pose estimation extension.

Table 4. Ablation study to evaluate the influence of our proposed 6D augmentation and it's individual parts. The reported results are in terms of the ADD(-S) metric and are obtained using our $\varphi = 0$ model, trained on the driller object of the Linemod dataset.

**Claims**

1. Process for the extension of known image-based deep-learning architectures for 2D-object-detection, **characterized in that** an additional 6-dimensional pose of several object classes and class instances can be estimated in a single inferencing step with nearly constant runtime.

2. Process in accordance with patent claim 1, **characterized in that** the images are monochrome, RGB or RGBD.

3. Process in accordance with any one of patent claims 1 or 2, **characterized in that** the 2D-object-detectors are anchor-based.

4. Process in accordance with any one of patent claims 1 to 3, **characterized in that** the 2D-object-detector architecture utilizes a feature-pyramid.

5. Process in accordance with any one of patent claims 1 to 3, **characterized in that** the 2D-object-detector architecture does not utilize a feature-pyramid.

6. Process in accordance with any one of patent claims 1 to 5, **characterized in that** the classification and regression tasks are determined by separate subnets.

7. Process in accordance with any one of patent claims 1 to 6, **characterized in that** all subnets for the determination of the 2D-bounding box, the object class, the 3D-rotation and the 3D-translation utilize the same feature-maps.

8. Process in accordance with any one of patent claims 1 to 3 and 5 to 7, **characterized in that** the regression task for the determination of the 3D-rotation are determined in a separate subnet separately from the 3D-translation.

9. Process in accordance with any one of patent claims 1 to 3 and 5 to 8, **characterized in that** the regression task for the determination of the 3D-translation are determined in a separate subnet separately from the 3D-rotation.

10. Process in accordance with any one of patent claims 1 to 3 and 5 to 9, **characterized in that** the final 3D-rotation and the final 3D-translation are selected by the Anchor-box-mapping and the Non-max-suppression of the 2D-object-detector.

11. Process in accordance with any one of patent claims 1 to 3 and 5 to 9, **characterized in that** the regression task for the 3D-rotation can be determined by using axis-angle representation with 3 or 4 parameters or quaternionic representation with 4 parameters.

12. Process in accordance with any one of patent claims 1 to 3 and 5 to 10, **characterized in that** the subnet for the determination of the 3D-rotation consists of two partial nets for initial regression and iterative refinement.

13. Process in accordance with any one of patent claims 1 to 3 and 5 to 10, **characterized in that** the subnet for the determination of the 3D-translation consists of two partial nets for initial translation and iterative refinement.

14. Process in accordance with any one of patent claims 1 to 3, 6, 7 and 9, **characterized in that** the subnet for the determination of the 3D-translation determines the 2D-centerpoint as an offset of each Anchor-box first and at the same time regresses the distance from the center of the object to the camera in space coordinates.

15. Process in accordance with any one of patent claims 1 to 3, 6, 7, 9 and 12, **characterized in that** a layer of the subnet for the determination of the 3D-translation determines the 3D-translation vector directly using the 2D-center point, the distance of the object's center point and the intrinsic camera parameters.

16. Process in accordance with any one of patent claims 1 to 3, 6, 7, 9 and 12 to 15, **characterized in that** a loss is determined that includes the 3D-translation and the 3D-rotation by transforming the 3D-shape model of the object with the estimated and ground-truth-6D-pose and subsequently the distance between all space coordinates is determined.

17. Process in accordance with patent claim 16, **characterized in that** the additional 6D-transformation loss is added to the loss of the 2D-object-detector.

18. Process in accordance with any one of patent claims 1 to 3, 6, 7, 9 and 12 to 17, **characterized in that** all additional intermediate steps to the existing 2D-object-detector are differentiable and thus enable an end-to-end training of the 6D-pose estimation.

19. Process in accordance with any one of patent claims 1 to 3, 6, 7, 9 and 12 to 18, **characterized in that,** through the always complete analysis of all anchor boxes including the 3D-rotation and 3D-translation in each inference step and the subsequent determination of the final 6D-pose via the anchor box mapping and the non-max-suppression of the 2D-object-detector, the runtime of the process is nearly independent from the number of object classes and instances present in the input image.

FIG.1

BiFP

EfficientNet Backbone

Subnetworks

Class net

Box net

Rotation net

Translation net

Subnets

FIG.2

Inital regression

Iterative refinement

FIG.3

FIG.4

FIG.5

FIG.6

FIG.7

FIG.8

FIG.9

FIG.10

| Method | YOLO6D [8] | Pix2Pose [9] | PVNet [10] | DPOD [11] | DPOD+ [11] | CDPN [12] | Hybrid-Pose [13] | Ours $\varphi = 0$ | Ours $\varphi = 3$ |
|---|---|---|---|---|---|---|---|---|---|
| ape | 21.62 | 58.1 | 43.62 | 53.28 | 87.73 | 64.38 | 63.1 | 87.71 | **89.43** |
| benchvise | 81.80 | 91.0 | **99.90** | 95.34 | 98.45 | 97.77 | **99.9** | 99.71 | 99.71 |
| cam | 36.57 | 60.9 | 86.86 | 90.36 | 96.07 | 91.67 | 90.4 | 97.94 | **98.53** |
| can | 68.80 | 84.4 | 95.47 | 94.10 | **99.71** | 95.87 | 98.5 | 98.52 | 99.70 |
| cat | 41.82 | 65.0 | 79.34 | 60.38 | 94.71 | 83.83 | 89.4 | **98.00** | 96.21 |
| driller | 63.51 | 76.3 | 96.43 | 97.72 | 98.80 | 96.23 | 98.5 | **99.90** | 99.50 |
| duck | 27.23 | 43.8 | 52.58 | 66.01 | 86.29 | 66.76 | 65.0 | **90.99** | 89.20 |
| eggbox* | 69.58 | 96.8 | 99.15 | 99.72 | 99.91 | 99.72 | **100** | 100 | 100 |
| glue* | 80.02 | 79.4 | 95.66 | 93.83 | 96.82 | 99.61 | 98.8 | **100** | 100 |
| holepuncher | 42.63 | 74.8 | 81.92 | 65.83 | 86.87 | 85.82 | 89.7 | 95.15 | 95.72 |
| iron | 74.97 | 83.4 | 98.88 | 99.80 | **100** | 97.85 | **100** | 99.69 | 99.08 |
| lamp | 71.11 | 82.0 | 99.33 | 88.11 | 96.84 | 97.89 | 99.5 | **100** | 100 |
| phone | 47.74 | 45.0 | 92.41 | 74.24 | 94.69 | 90.75 | 94.9 | 97.98 | **98.46** |
| Average | 55.95 | 72.4 | 86.27 | 82.98 | 95.15 | 89.86 | 91.3 | **97.35** | **97.35** |

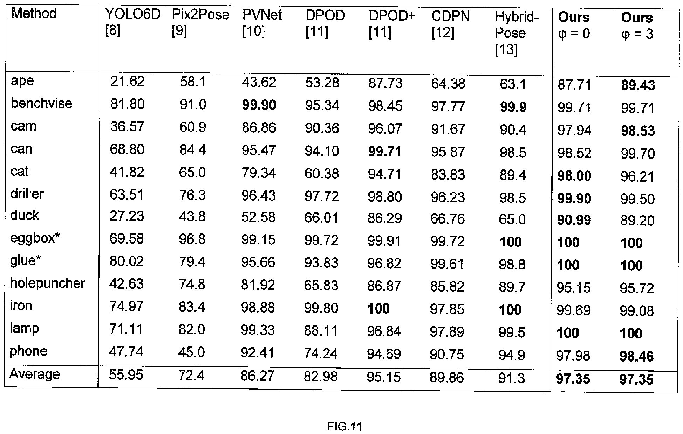

FIG.11

| Method | Ours φ = 0 | Ours φ = 3 |
|---|---|---|
| ape | 56.57 | **59.39** |
| can | 91.12 | **93.27** |
| cat | 68.58 | **79.78** |
| driller | 95.64 | **97.77** |
| duck | 65.31 | **72.71** |
| eggbox* | 93.46 | **96.18** |
| glue* | 85.15 | **90.80** |
| holepuncher | 76.53 | **81.95** |
| Average | 79.04 | **83.98** |

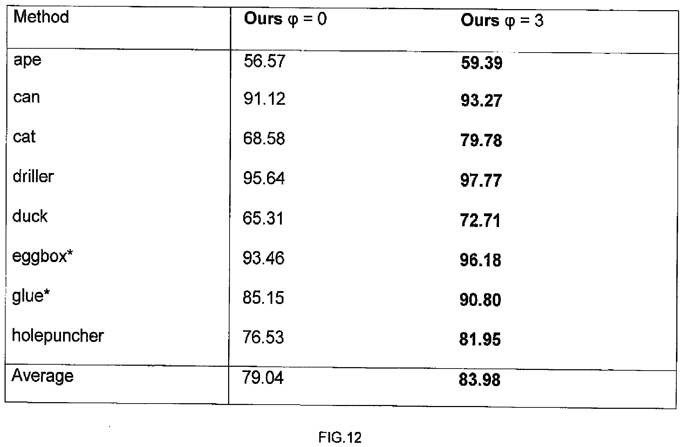

FIG.12

| Method | Ours | | | | Vanilla EfficientDet[7] | | | |
|---|---|---|---|---|---|---|---|---|
| Model | $\varphi = 0$ | | $\varphi = 3$ | | $\varphi = 0$ | | $\varphi = 3$ | |
| Single or multiple objects | Single | Multi | Single | Multi | Single | Multi | Single | Multi |
| Preprocessing ms | 8.17 | 8.12 | 24.38 | 24.26 | 8.07 | 8.56 | 25.69 | 26.95 |
| FPS | 122.40 | 123.14 | 41.02 | 41.22 | 123.92 | 116.82 | 38.93 | 37.11 |
| Network ms | 28.18 | 29.96 | 81.60 | 82.69 | 19.26 | 21.42 | 51.71 | 53.97 |
| FPS | 35.49 | 33.38 | 12.26 | 12.09 | 51.91 | 46.69 | 19.34 | 18.53 |
| End-to-end ms | 36.43 | 38.13 | 106.04 | 107.01 | 27.38 | 30.02 | 77.45 | 80.98 |
| FPS | 27.45 | 26.22 | 9.43 | 9.34 | 36.52 | 33.31 | 12.91 | 12.35 |

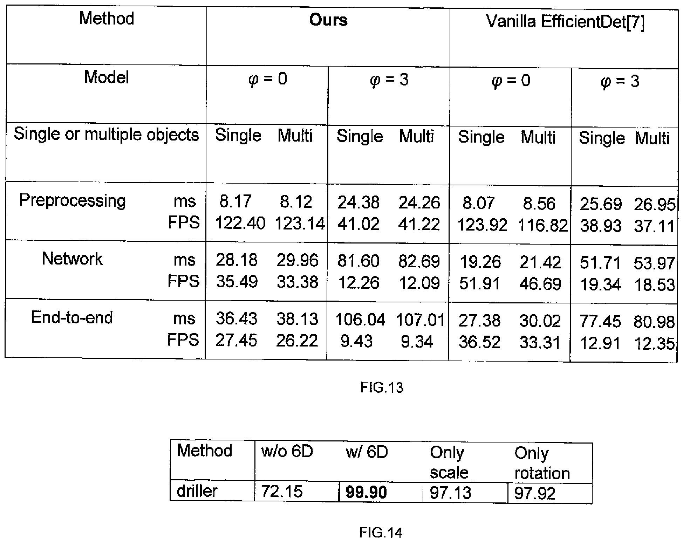

FIG.13

| Method | w/o 6D | w/ 6D | Only scale | Only rotation |
|---|---|---|---|---|
| driller | 72.15 | **99.90** | 97.13 | 97.92 |

FIG.14

Europäisches
Patentamt

European
Patent Office

Office européen
des brevets

# EUROPEAN SEARCH REPORT

Application Number

EP 20 02 0512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUIL SOCK ET AL: "Multi-Task Deep Networks for Depth-Based 6D Object Pose and Joint Registration in Crowd Scenarios", ARXIV.ORG, CORNELL UNIVERSITY LIBRARY, 201 OLIN LIBRARY CORNELL UNIVERSITY ITHACA, NY 14853, 11 June 2018 (2018-06-11), XP080889248, * abstract * * figure 1 * * from page 2, the last paragraph, to page 3, the first paragraph * ----- | 1-19 | INV. G06K9/62 G06T7/00 |
| A | TSUNG-YI LIN ET AL: "Feature Pyramid Networks for Object Detection", ARXIV.ORG, CORNELL UNIVERSITY LIBRARY, 201 OLIN LIBRARY CORNELL UNIVERSITY ITHACA, NY 14853, 9 December 2016 (2016-12-09), XP080738158, DOI: 10.1109/CVPR.2017.106 * abstract; figure 1 * ----- | 1-19 | |
| A | Anonymous: "End-to-end learning - Computer Science Wiki", , 6 April 2018 (2018-04-06), XP055790178, Retrieved from the Internet: URL:https://computersciencewiki.org/index. php?title=End-to-end_learning&oldid=8019 [retrieved on 2021-03-25] * the whole document * ----- -/-- | 1-19 | TECHNICAL FIELDS SEARCHED (IPC) G06K G06T |

The present search report has been drawn up for all claims

| Place of search | Date of completion of the search | Examiner |
|---|---|---|
| The Hague | 29 March 2021 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THALHAMMER STEFAN ET AL: "SyDPose: Object Detection and Pose Estimation in Cluttered Real-World Depth Images Trained using Only Synthetic Data", 2019 INTERNATIONAL CONFERENCE ON 3D VISION (3DV), IEEE, 16 September 2019 (2019-09-16), pages 106-115, XP033653356, DOI: 10.1109/3DV.2019.00021 [retrieved on 2019-10-28] * abstract; figure 2 * * from page 3, the right column, to page 4, the right column * ----- | 1-19 | |

TECHNICAL FIELDS
SEARCHED       (IPC)

The present search report has been drawn up for all claims

| Place of search | Date of completion of the search | Examiner |
|---|---|---|
| The Hague | 29 March 2021 | Natanni, Francesco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. QIAO ; L.-C. CHEN ; A. YUILLE.** *Detectors: Detecting objects with recursive feature pyramid and switchable atrous convolution,* 2020
- **X. DU ; T.-Y. LIN ; P. JIN ; G. GHIASI ; M. TAN ; Y. CUI ; Q. V. LE ; X. SONG.** *Spinenet: Learning scale-permuted backbone for recognition and localization,* 2020
- **B. ZOPH ; E. D. CUBUK ; G. GHIASI ; T.-Y. LIN ; J. SHLENS ; Q. V. LE.** *Learning data augmentation strategies for object detection,* 2019
- **T.-Y. LIN ; P. GOYAL ; R. GIRSHICK ; K. HE ; P. DOLL ÁR.** *Focal loss for dense object detection,* 2018
- **S. REN ; K. HE ; R. GIRSHICK ; J. SUN.** *Faster r-cnn: Towards real-time object detection with region proposal networks,* 2016
- **C.-Y. WANG ; H.-Y. M. LIAO ; I.-H. YEH ; Y.-H. WU ; P.-Y. CHEN ; J.-W. HSIEH.** *Cspnet: A new backbone that can enhance learning capability of cnn,* 2019
- **M. TAN ; R. PANG ; Q. V. LE.** Efficientdet: Scalable and efficient object detection. *IEEE/CVF Conference on Computer Vision and Pattern Recognition (CVPR),* 2020
- **B. TEKIN ; S. N. SINHA ; P. FUA.** *Real-time seamless single shot 6d object pose prediction,* 2018
- **K. PARK ; T. PATTEN ; M. VINCZE.** Pix2pose: Pixel-wise coordinate regression of objects for 6d pose estimation. *IEEE/CVF International Conference on Computer Vision (ICCV),* 2019
- **S. PENG ; Y. LIU ; Q. HUANG ; H. BAO ; X. ZHOU.** *Pvnet: Pixel-wise voting network for 6dof pose estimation,* 2018
- **S. ZAKHAROV ; I. SHUGUROV ; S. ILIC.** *Dpod: 6d pose object detector and refiner,* 2019
- **Z. LI ; G. WANG ; X. JI.** Cdpn: Coordinates-based disentangled pose network for real-time rgb-based 6- dof object pose estimation. *2019 IEEE/CVF International Conference on Computer Vision (ICCV),* 2019, 7677-7686
- **C. SONG ; J. SONG ; Q. HUANG.** *Hybridpose: 6d object pose estimation under hybrid representations,* 2020
- **M. A. FISCHLER ; R. C. BOLLES.** Random sample consensus: A paradigm for model fitting with applications to image analysis and automated cartography. *Commun. ACM,* vol. 24, 381-395
- Multimodal templates for real-time detection of texture-less objects in heavily cluttered scenes. **S. HINTERSTOISSER ; S. HOLZER ; C. CAGNIART ; S. ILIC ; K. KONOLIGE ; N. NAVAB ; V. LEPETIT.** Proceedings of the 2011 International Conference on Computer Vision, ICCV'11, (USA). IEEE Computer Society, 2011, 858-865
- **E. D. CUBUK ; B. ZOPH ; J. SHLENS ; Q. V. LE.** *Randaugment: Practical automated data augmentation with a reduced search space,* 2019
- **Y. XIANG ; T. SCHMIDT ; V. NARAYANAN ; D. FOX.** *Posecnn: A convolutional neural network for 6d object pose estimation in cluttered scenes,* 2018
- **W. KEHL ; F. MANHARDT ; F. TOMBARI ; S. ILIC ; N. NAVAB.** *Ssd-6d: Making rgb-based 3d detection and 6d pose estimation great again,* 2017
- **M. SUNDERMEYER ; Z.-C. MARTON ; M. DURNER ; M. BRUCKER ; R. TRIEBEL.** *Implicit 3d orientation learning for 6d object detection from rgb images,* 2019
- **W. LIU ; D. ANGUELOV ; D. ERHAN ; C. SZEGEDY ; S. REED ; C.-Y. FU ; A. C. BERG.** Ssd: Single shot multi- box detector. *Lecture Notes in Computer Science,* 2016, 21-37
- **B. CHEN ; A. PARRA ; J. CAO ; N. LI ; T.-J. CHIN.** *End- to-end learnable geometric vision by backpropagating pnp optimization,* 2020
- **M. RAD ; V. LEPETIT.** *Bb8: A scalable, accurate, robust to partial occlusion method for predicting the 3d poses of challenging objects without using depth,* 2018
- **J. TREMBLAY ; T. TO ; B. SUNDARALINGAM ; Y. XIANG ; D. FOX ; S. BIRCHFIELD.** *Deep object pose estimation for semantic robotic grasping of household objects,* 2018
- **R. GIRSHICK ; J. DONAHUE ; T. DARRELL ; J. MALIK.** *Rich feature hierarchies for accurate object detection and semantic segmentation,* 2014
- **R. GIRSHICK.** *Fast r-cnn,* 2015
- **K. HE ; X. ZHANG ; S. REN ; J. SUN.** *Deep residual learning for image recognition,* 2015
- **E. REAL ; A. AGGARWAL ; Y. HUANG ; Q. V. LE.** *Regularized evolution for image classifier architecture search,* 2019
- **J. REDMON ; A. FARHADI.** *Yolov3: An incremental improvement,* 2018

- **M. TAN ; Q. V. LE.** *Efficientnet: Rethinking model scaling for convolutional neural networks,* 2020
- **T.-Y. LIN ; M. MAIRE ; S. BELONGIE ; L. BOURDEV ; R. GIR- SHICK ; J. HAYS ; P. PERONA ; D. RAMANAN ; C. L. ZITNICK ; P. DOL-LÁR.** *Microsoft coco: Common objects in context,* 2015
- **S. MAHENDRAN ; H. ALI ; R. VIDAL.** *3d pose regression using convolutional neural networks,* 2017
- **A. KANAZAWA ; M. J. BLACK ; D. W. JACOBS ; J. MALIK.** *End-to-end recovery of human shape and pose,* 2018
- **F. CHOLLET.** *Xception: Deep learning with depthwise separable convolutions,* 2017
- **Y. WU ; K. HE.** *Group normalization,* 2018
- **P. RAMACHANDRAN ; B. ZOPH ; Q. V. LE.** *Searching for activation functions,* 2017
- **S. ELFWING ; E. UCHIBE ; K. DOYA.** *Sigmoid-weighted linear units for neural network function approximation in reinforcement learning,* 2017
- **D. HENDRYCKS ; K. GIMPEL.** *Gaussian error linear units (gelus),* 2020
- **M. ABADI ; A. AGARWAL ; P. BARHAM ; E. BREVDO ; Z. CHEN ; C. CITRO ; G. S. CORRADO ; A. DAVIS ; J. DEAN ; M. DEVIN.** *TensorFlow: Large-scale machine learning on heterogeneous systems,* 2015
- **J. S. DAI.** Euler-rodrigues formula variations, quaternion conjugation and intrinsic connections. *Mechanism and Machine Theory,* 2015, vol. 92, 144-152
- *tfg.geometry.transformation.axis angle.rotate,* 29 September 2020, https: //www.tensorflow.org/graphics/ api_docs/python/tfg/geometry/ transformation/axis_angle/rotate
- **E. BRACHMANN ; A. KRULL ; F. MICHEL ; S. GUMHOLD ; J. SHOTTON ; C. ROTHER.** Learning 6d object pose estimation using 3d object coordinates. *Computer Vision - ECCV,* 2014
- Cham. Springer International Publishing, 2014, 536-551
- *Camera Calibration and 3D Reconstruction,* 29 September 2020, https: //docs.opencv.org/2.4/modules/ calib3d/doc/camera_calibration_and_3d_reconstruction.html
- **E. BRACHMANN ; F. MICHEL ; A. KRULL ; M. Y. YANG ; S. GUMHOLD ; C. ROTHER.** Uncertainty-driven 6d pose estimation of objects and scenes from a single rgb image. *2016 IEEE Conference on Computer Vision and Pattern Recognition (CVPR),* 2016, 3364-3372
- **S. HINTERSTOISSER ; V. LEPETIT ; S. ILIC ; S. HOLZER ; G. BRADSKI ; K. KONOLIGE ; N. NAV-AB.** Model based training, detection and pose estimation of texture-less 3d objects in heavily cluttered scenes. *Computer Vision - ACCV,* 2012
- Berlin, Heidelberg. Springer Berlin Heidelberg, 2013, 548-562
- **D. P. KINGMA ; J. BA.** *Adam: A method for stochastic optimization,* 2017